# FASCICULE DE BREVET EUROPEEN

(11) **EP 0 603 086 B1**
(45) Date de publication et mention de la délivrance du brevet: **12.03.1997**
(21) Numéro de dépôt: 93420485.0
(22) Date de dépôt: 08.12.1993
(51) Int. Cl.: A01D 34/73

(54) **Lame pour machines du type débrousailleuses portables et tondeuses à gazon notamment**
Messer für Maschinen wie zum Beispiel tragbare Sichelmäher und Rasenmäher
Blade for machines like portable brush cutters and lawn mowers

(30) Priorité: 10.12.1992 FR 9215125
(43) Date de publication de la demande: 22.06.1994
(73) Titulaire: Lays, Louis, F-42240 Saint Maurice en Gourgois (FR)
(72) Inventeur: Lays, Louis, F-42240 Saint Maurice en Gourgois (FR)
(74) Mandataire: Weydert, Robert

(56) Documents cités:
- DE-A- 2 448 130
- DE-A- 3 838 427
- FR-A- 1 563 526
- US-A- 3 621 642
- US-A- 3 894 385

## Description

Généralement, une débroussailleuse ou tondeuse ou machine similaire, présente des lames compactes et rigides exposant l'utilisateur aux blessures en cas de cassures de ces lames à la suite de chocs sur des objets durs. Il peut en résulter également une déterioration prématurée des organes de transmission de la machine.

Cet état de la technique peut être illustré par l'enseignement des brevets DE 2448130 et US 3894385.

Le document DE A2448130 décrit une lame de coupe pour gazon constituée de deux disques concentriques distants par un espace destiné à accueillir des couteaux minces du type lame à rasoir ou domestique de faible épaisseur coupant à une vitesse de rotation de l'ordre de 1000 Trs/min ; les couteaux sont montes mobiles, et escamotables en cas de rencontre d'un corps étranger autour d'un goujon fixé à une extrémité sur un disque et dont l'autre extrémité rentre dans un trou en regard dans l'autre disque. Les couteaux comportent pour leur attache sur le goujon un trou ou deux ou un trou oblong, sans plus de précision.

Les couteaux sont changés en écartant, simplement avec les doigts d'une main, les deux disques l'un de l'autre.

A la connaissance du demandeur ce type de lame n'a jamais été commercialisé en raison du mauvais maintien des couteaux et la mauvaise coupe. En cours de fonctionnement malgré la faible vitesse de rotation, les disques s'écartent tout seul et les couteaux se libèrent par l'extrémité libre du goujon et sont éjectés dangereusement aux alentours. A la vitesse trop faible de rotation de 1000 Trs/min, les tiges de gazon se couchent sous le couteau sans être coupées. L'augmentation du nombre des couteaux accentue désavantageusement le phénomène. Ces couteaux sont très rapidement hors d'usage après avoir coupé des herbes siliceuses ou rencontré de la terre et du sable, les couteaux sont fragiles et se cassent dangereusement en rencontrant des corps étrangers.

Le document FRA 1563526 montre les caractéristiques du préambule de la revendication 1.

Le document USA 3894385 décrit une tête de tondeuse dont les couteaux peuvent s'escamoter entre deux disques espacés, en cas de rencontre avec un corps étranger. Chaque couteau comporte en son centre un trou légèrement oblong dont l'axe est confondu avec l'axe médiant. La partie du couteau opposée à l'arête de coupe est repliée verticalement au plan de rotation de lame en vue de créer un courant d'air expulsant le gazon coupé. Les avantages procurés sont la réduction de la vitesse de rotation et par là du bruit et de la puissance du moteur d'entraînement.

L'invention concerne un couteau pour débroussailleuses portables et tondeuses à gazon de forme rectangulaire présentant deux arêtes de coupe opposées et comportant une lumière oblongue destinée à coopérer avec l'axe du couteau ; caractérisé en ce qu'il est de forme parfaitement symétrique par rapport au point d'intersection de deux lignes diagonales et en ce que la dite lumière oblongue est disposée selon un angle formé entre la lumière et le côté du couteau variant suivant l'angle de coupe recherché sur la face permettant le retournement instantané du couteau et offrant ainsi alternativement l'une ou l'autre des deux arêtes de coupe suivant l'usure sans aucun démontage.

Dans une réalisation avantageuse, le couteau comporte sur deux angles diagonalement opposés un rayon permettent l'escamotage total.

L'invention concerne également une lame pour machine du type débroussailleuse portable et tondeuse à gazon notament, comprenant deux disques concentriques et parallèles maintenus espacés par une entretoise caractérisée en ce que les deux disques sont assemblés par des axes engagés par la lumière oblongue du couteau défini ci-dessus.

Dans une réalisation avantageuse, la lame est caractérisée en ce que le dit axe peut être vissé ou riveté, permettant l'assemblage des disques entre lesquels sont placés les dits couteaux une entretoise maintenant l'écartement des disques pour permettre aux couteaux de s'articuler librement.

Dans une autre réalisation avantageuse, la lame est caractérisée en ce que la dite entretoise comporte deux épaulements situés de chaque côté de la dite entretoise et ayant une épaisseur inférieure à l'épaisseur du disque afin que le serrage de la lame sur la machine soit plus efficace.

Dans une autre réalisation avantageuse, la lame est caractérisée en ce que l'entretoise présente un alésage défini par le diamètre de l'axe de la machine.

Dans une autre réalisation avantageuse, la lame est caractérisée en ce qu'elle présente des ailettes en forme de demi-hélices montées sur l'un des disques pour entraîner le gazon tondu, les dites ailettes présentent une partie relevée faisant office de pâle.

Dans une autre réalisation avantageuse, la lame est caractérisée en ce que les ailettes sont disposées coaxialement aux couteaux ou sur un axe défini sur la face du disque au moyen d'un trou.

Dans une autre réalisation avantageuse, la lame est caractérisée en ce que les ailettes sont escamotables lors du contact avec un objet dur non coupable.

Le problème que se pose de résoudre l'invention, est de pouvoir escamoter automatiquement les parties coupantes de la lame, en cas de contact avec un objet dur, qu'il n'est normalement pas possible de couper avec ce type de machine.

Pour résoudre un tel problème il a été conçu et mis au point une lame pour machines du type débroussaileuses portables et tondeuses à gazon notament, qui comprend un corps circulaire apte à recevoir au moins un couteau disposé radialement en débordement du dit corps, le ou les dits couteaux étant montés en combinaison avec des agencements du corps, pour être automatiquement, d'une part, escamotés à l'encontre d'un objet dur non coupable et, d'autre part, ramenés en position de travail sous l'effet de la force centrifuge.

Pour résoudre le problème posé d'assurer automatiquement l'escamotage des couteaux, et de les ramener en position de travail sous l'effet de la force centrifuge, la lame présente les caractéristiques.
- le corps comprend deux disques parallèles maintenus espacés par des entretoises et assemblés par des axes, pour le montage des couteaux entre entre les dits disques.
- le ou les couteaux sont de forme générale rectangulaire en présentant au moins une arête de coupe et comportent sur deux angles diagonalement opposés un rayon permettant l'escamotage total entre les disques.
- le ou les couteaux sont de forme rectangulaire, parfaitement symétrique par rapport au point d'intersection de deux lignes diagonales et présentent deux arêtes de coupe opposées, ce qui permet leur retournement sans aucun déséquilibrage de la lame, offrant ainsi alternativement l'une ou l'autre des deux arêtes de coupe suivant l'usure sans aucun démontage.
- le ou les couteaux comportent une lumière oblongue disposée en diagonale sur leur face, et coopérant avec les axes du ou des couteaux, la position de la lumière déplace l'inertie et maintien l'arête de coupe toujours en alignement axial avec le centre de la lame.

Dans une autre forme de réalisation, on prévoit de combiner les couteaux avec les ailettes aptes à entraîner le gazon ou autre vers un bac de récupération.

Dans ce but, la lame présente des ailettes en forme de demi-hélices montées sur l'un des disque pour entraîner le gazon fondu vers un bac de récupération, les dites ailettes présentant une partie relevée faisant office de pâle. Les ailettes sont disposées coaxialement aux couteaux, sur un axe défini sur la face du disque, au moyen d'un trou et sont escamotables lors du contact avec un objet dur non coupable.

L'invention est illustrée ci-aprés à l'aide des dessins annexés, dans lesquels :

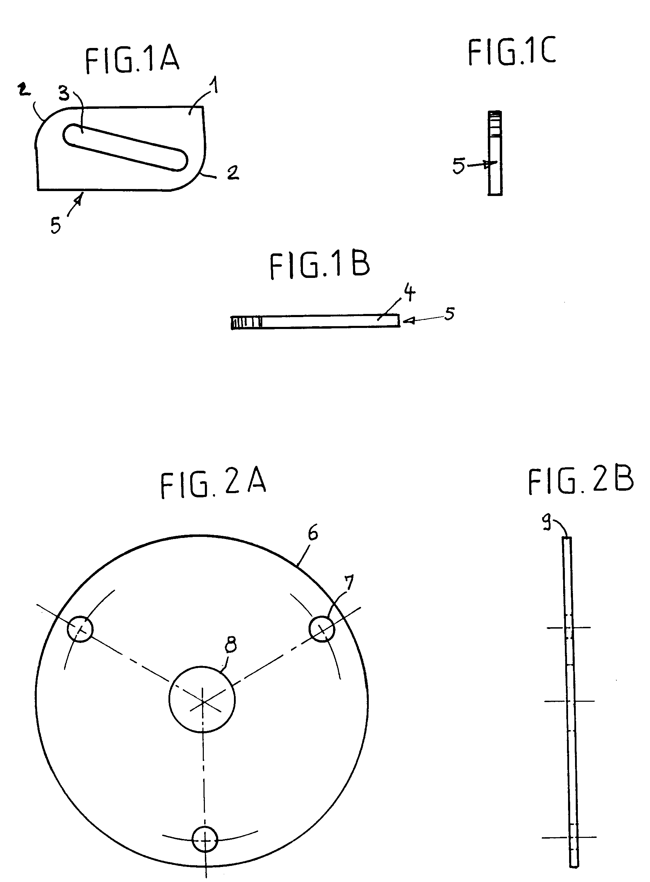

La figure 1A est une vue de dessus d'un couteau.
La figure 1B est une vue de côté correspondant à la figure 1A.
La figure 1C est une vue de côté correspondant à la figure 1A.
La figure 2A est une vue de dessus du disque superieur.
La figure 2B est une vue de côté correspondant à la figure 2A.

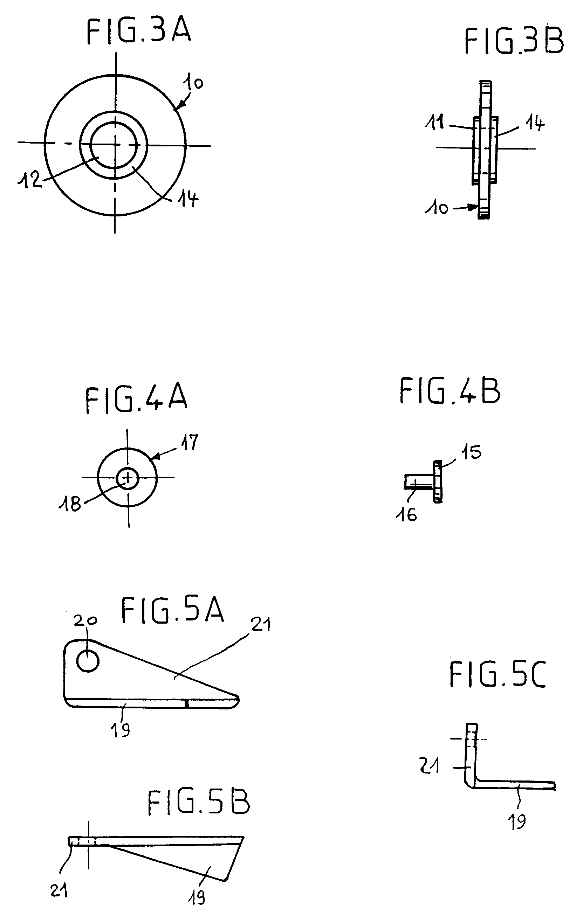

La figure 3A est une vue de dessus de l'entretoise.
La figure 3B est une vue de côté correspondant à la figure 3A.
La figure 4A est une vue de dessus de l'un des axes d'articulation.
La figure 4B est un vue côté correspondant à la figure 4A.

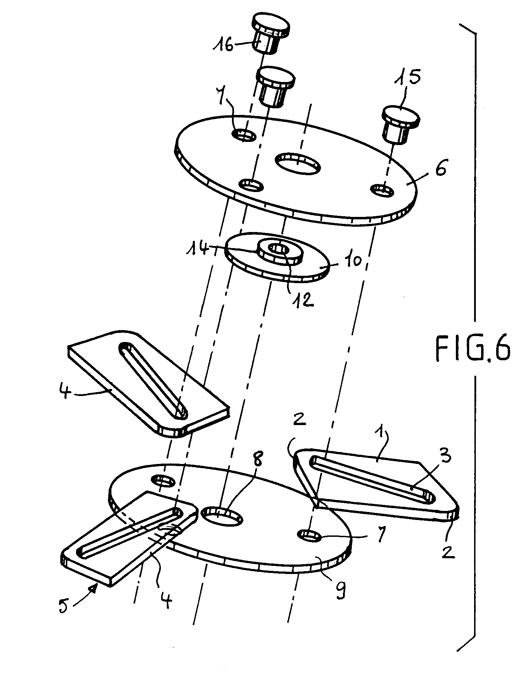

La figure 5A est une vue de dessus d'une ailette.
La figure 5B est une vue de côté correspondant à la figure 5A.
La figure 5C est une vue de côté correspondant à la figure 5A
La figure 6 est une vue en perspective des différents éléments constitutifs de la lame selon l'invention et avant montage.

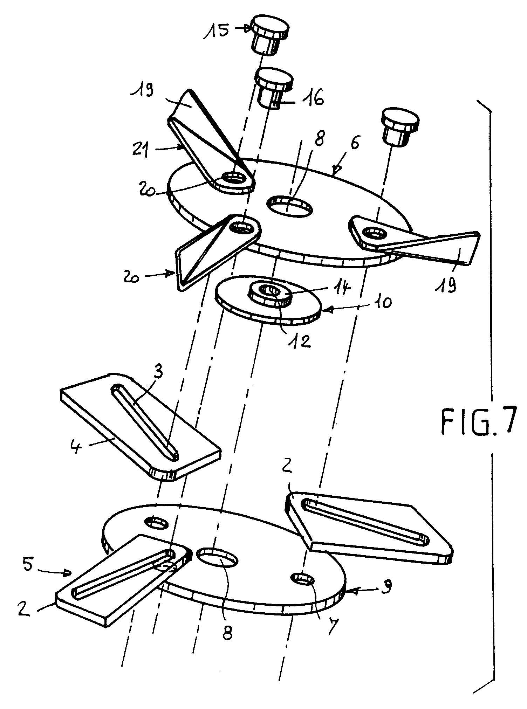

La figure 7 est une vue en perspective des différents éléments constitutifs de la lame selon l'invention et avant montage et dans une autre forme de réalisation.

Selon l'invention, la lame comprend un corps circulaire composé de deux disques parallèles (6) et (9) entre lesquels sont montés radialement des couteaux (5). Les couteaux sont montés en combinaison avec des axes (15) engagés dans une lumière oblongue (3) pour, d'une part, être automatiquement escamotés à l'encontre d'un objet dur non coupable et, d'autre part, ramenés en position de travail sous l'effet de la force centrifuge.

Les couteaux qui présentent deux arêtes de coupe (4) sont de forme rectangulaire et présentent deux angles diagonalement opposés (2) rayonnés pour permettre leur escamotage total. Les couteaux (5) peuvent comporter selon une première caractéristique, sur leur face (1), une lumière oblongue ; placés de façon à permettre une articulation parfaite du couteau entre les disques (6), soit dans l'axe d'une ligne longitudinale, soit désaxés par rapport à cette ligne, vers la droite ou vers la gauche, suivant l'angle de coupe que l'on désire obtenir. La position de cette lumière agissant sur la masse d'inertie tendra à incliner le couteau, soit vers l'arrière par rapport à l'axe du disque, soit vers l'avant.

Comme indiqué, dans une autre forme de réalisation, les axes d'articulation (15) des couteaux (5) sont engagés dans une lumière oblongue (3), permettant le retournement instantané du couteau sans démontage. L'angle formé entre la lumière et le côté du couteau variera suivant l'angle de coupe recherché. Les couteaux ainsi libres sur leur axes d'assemblage, se placent automatiquement a l'angle de coupe prévu sous l'effet de la force centrifuge dès les premiers tours de la lame. Leur épaisseur d'environ 3 mm, peut varier selon le travail à effectuer. Par exemple, les couteaux conçus en acier sont soumis à un traitement leur donnant une dureté optimum tout en respectant une souplesse les préservant de la cassure.

La disposition en diagonale de la lumière oblongue (3), déplace l'inertie et maintien l'arête coupante (4) du couteau toujours en axe du centre de la lame.

Comme indiqué, les couteaux comportent sur deux angles diagonalement opposés un rayon (2) permettant l'escamotage total entre les disques et sont de forme rectangulaire, parfaitement symétriques par rapport au point d'intersection de deux lignes diagonales, ce qui permet le retournement sans aucun déséquilibrage de la lame, offrant ainsi alternativement l'une ou l'autre des deux arêtes tranchantes (4) suivant l'usure, sans aucun démontage.

Dans la forme de réalisation illustrée, les disques (6) et (9) présentent, au centre, un alésage (8) coopérant avec des portées circulaire (11)(14) d'une entretoise désignée dans son ensemble par (10). Trois trous équidistants (7) sont placés à environ 12 mm du bord de la circonférence des disques (6) et (9) et peuvent varier dans leur diamètre ou dans leur position suivant le diamètre des dits disques. Ces trous (7) reçoivent l'axe (15) qui peut être vissé ou riveté et d'un diamètre (16) correspondant au diamètre des dits trous (7), permettant l'assemblage des disques, entre lesquels sont placés les couteaux et, de l'entretoise (10) maintenant l'écartement des disques, pour permettre aux couteaux de s'articuler librement. L'entretoise comporte deux épaulements (11) et (14) correspondant à l'épaisseur du disque (moins de deux dixième) afin que le serrage de la lame sur la machine soit plus efficace. Elle comporte également un alésage (12) correspondant au diamètre de l'axe de la machine utilisée.

Compte-tenu de ces dispositions, les couteaux suivant l'invention sont escamotables. Lors d'un contact avec un objet dur, ils glissent entre les deux disques (6) et (9) et disparaissent entièrement, évitant ainsi tous risques de chocs pouvant provoquer la détérioration des organes mécaniques de la machine. Après l'escamotage des coûteaux, seuls les disques restent au contact de l'obstacle et, dès son retrait, la force centrifuge replace les coûteaux en position de travail.

Dans une autre forme de réalisation, en variante, des ailettes (21), en forme de demi-hélices, sont placées sur la partie supérieure du disque, soit en utilisant le même axe, soit en utilisant un axe différent dont l'emplacement sera déterminé sur le disque. Ces ailettes, ainsi placées, permettent par une partie relevée (19) formant pâle, d'entraîner le gazon tondu vers un bac de récupération. Articulées de la même façon que les coûteaux, les ailettes sont escamotables, en totalité, dès leur contact avec un objet dur ou, en cas de bourrage du gazon. Elles peuvent être installées sur la plupart des lames compactes existantes sur le marché suivant une position de travail déterminée.

A noter que le diamètre (16) des axes (15) est défini par l'effort qui leur est demandé, ce qui permet de déterminer :
- le diamètre (20) sur les ailettes (21),
- le diamètre (7) sur les disques (6) et (9),
- la largeur (3) des lumières oblongues des coûteaux.

Les avantages ressortent bien de la description, en particulier on souligne et on rappelle :
- les coûteaux et les ailettes sont escamotables lors du contact avec un objet dur, ne pouvant être coupé,
- les coûteaux se glissent entre les disques et les ailettes se rangent dessus, limitant au maximum les risques de détérioration mécanique de la machine (transmission, embrayage, transfert) et écartant tout danger de cassure pour l'utilisateur.

## Revendications

1. Couteau pour débroussailleuses portables et tondeuses à gazon de forme rectangulaire présentant deux arêtes de coupe opposées et comportant une lumière oblongue (3) destinée à coopérer avec l'axe du couteau ; caractérisé en ce qu'il est de forme parfaitement symétrique par rapport au point d'intersection de deux lignes diagonales et en ce que la dite lumière oblongue (3) est inclinée selon un angle par rapport au côté du couteau variant suivant l'angle de coup recherché sur la face permettant le retournement instantané du couteau et offrant ainsi alternativement l'une ou l'autre des deux arêtes de coupe (4) suivant l'usure sans aucun démontage.

2. Couteau selon la revendication 1 caractérisé en ce qu'il comporte sur deux angles diagonalement opposés un rayon (2) permettent l'escamotage total.

3. Lame pour machine du type débroussailleuse portable et tondeuse à gazon notament, comprenant deux disques concentriques et parallèles (6-9) maintenus espacés par une entretoise (10) caractérisée en ce que les deux disques (6-9) sont assemblés par des axes (15) engagés par la lumière oblongue (3) du couteau selon l'une des revendications 1 ou 2.

4. Lame selon la revendication 3 caractérisée en ce que le dit axe (15) peut être vissé ou riveté, permettant l'assemblage des disques (6-9) entre lesquels sont placés les dits couteaux (1) une entretoise (10) maintenant l'écartement des disques pour permettre aux couteaux de s'articuler librement.

5. Lame selon la revendication 4 caractérisée en ce que la dite entretoise comporte deux épaulements (11-14) situés de chaque côté de la dite entretoise et ayant une épaisseur inférieure à l'épaisseur du disque afin que le serrage de la lame sur la machine soit plus efficace.

6. Lame selon l'une des revendications 4 ou 5 caractérisée en ce que l'entretoise (12) présente un alésage défini par le diamètre de l'axe de la machine.

7. Lame selon l'une des revendications 3 à 6 caractérisée en ce qu'elle présente des ailettes (21) en forme de demi-hélices montées sur l'un des disques (6) pour entraîner le gazon tondu, les dites ailettes présentent une partie relevée (19) faisant office de pâle.

8. Lame selon la revendication 7 caractérisée en ce que les ailettes sont disposées coaxialement aux couteaux ou sur un axe défini sur la face du disque au moyen d'un trou (20).

9. Lame selon l'une des revendications 7 ou 8 caractérisée en ce que les ailettes sont escamotables lors du contact avec un objet dur non coupable.

## Claims

1. Knife for portable brush cutters and lawn mowers of rectangular shape having two opposed cutting edges and having an elongated aperture (3) adapted to cooperate with the axis of the knife; characterized in that it is of perfect symmetrical shape with respect to the point of intersection of two diagonal lines and in that said elongated aperture (3) is inclined at an angle with respect to the side of the knife varying with the desired cutting angle on the face permitting instantaneous reversal of the knife and thus exposing alternatively the one or the other of the two cutting edges (4) depending on the wear without any disassembly.

2. Knife according to claim 1, characterized in that it has on two diagonally opposite angles a radius (2) permitting full rectraction.

3. Rotor for machine particularly of the portable brush cutter and lawn mower type, comprising two concentric and parallel disks (6-9) maintained spaced from one another by a spacer (10), characterized in that the two disks (6-9) are assembled by means of shafts (15) extending through the elongated aperture (3) of the knife according to one of the claims 1 or 2.

4. Rotor according to claim 3, characterized in that said shaft (15) is adapted to be screwed or riveted, permitting assembly of the disks (6-9) between which said knives (1) are placed, a spacer (10) maintaining the spacing of the disks to permit the knives to articulate freely.

5. Rotor according to claim 4, characterized in that said spacer comprises two shoulders (11-14) disposed one on each side of said spacer and having a thickness lower than the thickness of the disk for the clamping of the rotor on the machine to be more effective.

6. Rotor according to one of claims 4 or 5, characterized in that the spacer (12) is provided with a bore defined by the diameter of the axis of the machine.

7. Rotor according to one of claims 3 to 6, characterized in that it has wings (21) shaped in the form of half blades mounted on one of the disks (6) to drive the cut grass, said wings having an upstanding portion (19) acting as a paddle.

8. Rotor according to claim 7, characterized in that the wings are disposed coaxially with the knives or on an axis defined on the face of the disk by means of a hole (20).

9. Rotor according to one of claims 7 or 8, characterized in that the wings are retractable when contacting a hard non-cuttable object.

## Patentansprüche

1. Messer für tragbare Gebüschschneider und Rasenmäher, mit rechteckiger Form und zwei gegenüberliegenden Schneidkanten, sowie einem Längsschlitz (3) zur Zusammenwirkung mit der Achse des Messers; dadurch gekennzeichnet, daß es völlig symmetrisch geformt ist in bezug auf den Schnittpunkt von zwei Diagonallinien und daß der Längsschlitz (3) gemäß einem Winkel mit Bezug auf die Seite des Messers geneigt ist, der mit dem erwünschten Schneidwinkel auf der Vorderseite ändert, für ein sofortiges Wenden des Messers, damit abwechselnd die eine oder die andere der beiden Schneidkanten (4) wirksam sein kann, je nach dem Abnutzungsgrad ohne jede Zerlegung.

2. Messer nach Anspruch 1, dadurch gekennzeichnet, daß es auf zwei diagonal gegenüberliegenden Ecken einen Radius (2) aufweist, zum völligen Zurückbewegen des Messers.

3. Rotor für Maschinen insbesondere der tragbaren Gebüschschneider- und Rasenmäherbauart, mit zwei konzentrischen und parallelen Scheiben (6-9), welche über ein Zwischenstück (10) in Abstand voneinander gehalten werden, dadurch gekennzeichnet, daß die zwei Scheiben (6-9) durch Schäfte (15) zusammengefügt sind, welche sich durch den Längsschlitz (3) des Messers entsprechend einem der Ansprüche 1 oder 2 erstrecken.

4. Rotor nach Anspruch 3, dadurch gekennzeichnet, daß der Schaft (15) geschraubt oder genietet sein kann zum Zusammenbauen der Scheiben (6-9) zwischen welchen die Messer (1) angeordnet sind, wobei ein Zwischenstück (10) die Beabstandung der Scheiben gewährleistet, damit die Messer frei beweglich sind.

5. Rotor nach Anspruch 4, dadurch gekennzeichnet, daß das Zwischenstück zwei Schultern (11-14) aufweist, welche beidseitig des Zwischenstücks angeordnet sind und eine kleinere Dicke als die Dicke der Scheibe aufweisen, damit das Festklemmen des Rotors an der Maschine sicherer ist.

6. Rotor nach einem der Ansprüche 4 oder 5, dadurch gekennzeichnet, daß das Zwischenstück (12) eine Bohrung aufweist, welche durch den Durchmesser der Maschinenwelle bestimmt ist.

7. Rotor nach einem der Ansprüche 3 bis 6, dadurch gekennzeichnet, daß er Flügel (21) in Form von Blatthälften aufweist, die auf einer der Scheiben (6) angeordnet sind zum Forttreiben des geschnittenen Grases, wobei die Flügel mit einem aufwärts ragenden Teil (19) versehen sind, der als Flügelblatt dient.

8. Rotor nach Anspruch 7, dadurch gekennzeichnet, daß die Flügel koaxial zu den Messern angeordnet sind oder auf einer Achse sitzen, welche auf der Fläche der Scheibe durch ein Loch (20) bestimmt ist.

9. Rotor nach einem der Ansprüche 7 oder 8, dadurch gekennzeichnet, daß die Flügel zurückbeweglich sind beim Aufschlagen gegen einem harten, nicht schneidbaren Gegenstand.
